# EUROPEAN PATENT SPECIFICATION

(11) **EP 3 739 178 B1**
(45) Date of publication and mention of the grant of the patent: **29.12.2021**
(21) Application number: 20174246.7
(22) Date of filing: 12.05.2020
(51) Int. Cl.: F01N 13/00, F01N 13/08, F01N 3/10, F01N 3/08

(54) **EXHAUST GAS TREATMENT DEVICE FOR AN INTERNAL COMBUSTION ENGINE**
ABGASNACHBEHANDLUNGSEINRICHTUNG FÜR VERBRENNUNGSKRAFTMASCHINEN
DISPOSITIF DE TRAITEMENT DE GAZ D'ÉCHAPPEMENT D'UN MOTEUR DE COMBUSTION INTERNE

(30) Priority: 17.05.2019 IT 201900006960
(43) Date of publication of application: 18.11.2020
(73) Proprietor: Marelli Europe S.p.A., 20011 Corbetta (MI) (IT)
(72) Inventor: CAPOGROSSO, Damiano, 10153 TORINO (IT); ETTORRE, Daniele, 20123 MILANO (IT); FANTETTI, Antonio, 10147 TORINO (IT); GAMBAROTTO, Massimiliano, 10147 TORINO (IT); GARBOLINO, Franco, 10147 TORINO (IT)
(74) Representative: Maccagnan, Matteo

(56) References cited:
- DE-A1-102016 114 283
- US-B2- 9 689 290

## Description

### CROSS-REFERENCE TO RELATED APPLICATIONS

This patent application claims priority from Italian patent application no. 102019000006960 filed on May 17, 2019.

### TECHNICAL FIELD

This invention relates to an exhaust gas treatment device for an internal combustion engine.

### PRIOR ART

An internal combustion engine comprises a plurality of cylinders, each of which is connected to an intake manifold via at least one respective intake valve and to an exhaust manifold via at least one respective exhaust valve. The intake manifold is connected to a filtering device to receive fresh air (i.e. air from the external environment) and is regulated by a throttle valve, while the exhaust manifold is connected to an exhaust system, which has the function of releasing the gases produced by combustion into the atmosphere, limiting both the noise and the pollutants content.

The exhaust system comprises at least one exhaust gas treatment device equipped with one or more catalyst monoliths that have the function of transforming unburned hydrocarbons, carbon monoxide (CO) and oxides of nitrogen (NOₓ), into carbon dioxide (CO₂), water, and nitrogen.

Patent application DE102016114283A1 describes an exhaust gas post-treatment device, while patent US9689290B2 describes a reducing mixture system for an exhaust gas post-treatment device.

### DESCRIPTION OF THE INVENTION

The purpose of this invention is to provide an exhaust gas treatment device for an internal combustion engine, which makes it possible to minimise the pressure loss (i.e. the drop in pressure to which exhaust gases are subjected when passing through the exhaust gas treatment device) without compromising its ability to reduce pollutants.

According to this invention an exhaust gas treatment device for an internal combustion engine is provided, according to what is set forth in the appended claims.

The claims describe preferred embodiments of this invention, forming an integral part of this description.

### BRIEF DESCRIPTION OF THE DRAWINGS

This invention will now be described with reference to the accompanying drawings, which illustrate a non-limiting embodiment thereof, wherein:
- Figure 1 is a perspective view of an internal combustion engine provided with an exhaust gas treatment device made according to this invention;
- Figures 2-7 are different perspective views of the exhaust gas treatment device in Figure 1;
- Figure 8 is a partially longitudinal section view of the exhaust gas treatment device in Figure 1;
- Figure 9 is a front view of the exhaust gas treatment device in Figure 1; and
- Figure 10 is a perspective, exploded view of the exhaust gas treatment device in Figure 1.

### PREFERRED EMBODIMENTS OF THE INVENTION

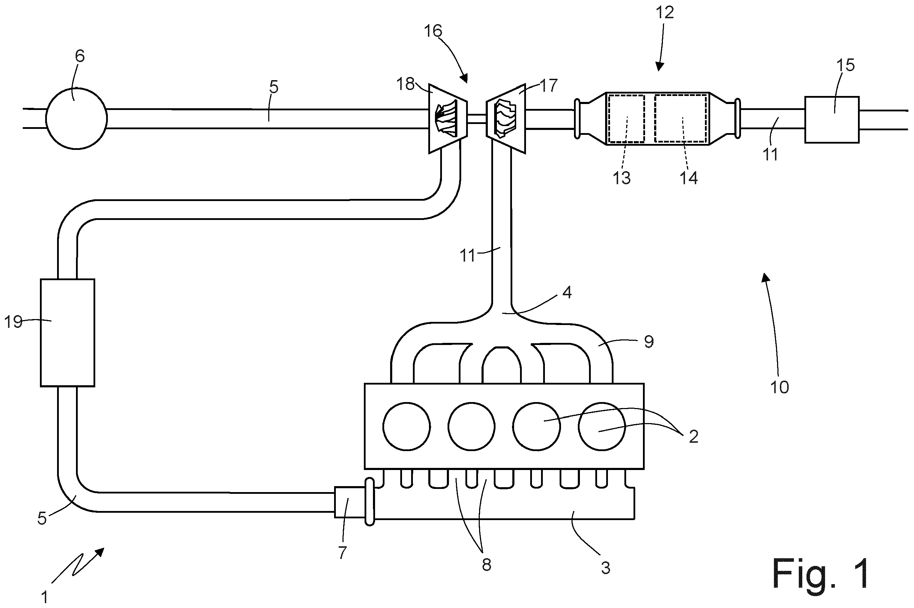

In Figure 1, the reference number 1 indicates, as a whole, an Otto-cycle internal combustion engine (i.e. an engine that runs on petrol or similar fuels). The engine 1 comprises four cylinders 2, each of which is connected to an intake manifold 3 via at least one respective intake valve (not illustrated) and to an exhaust manifold 4 via at least one respective exhaust valve (not illustrated).

The intake manifold 3 receives fresh air (i.e. air from the external environment) through an intake duct 5, which is provided with an air filter 6 and is controlled by a throttle valve 7; the intake manifold 3 is connected to the cylinders 2 via respective intake ducts 8. According to the embodiment illustrated in Figure 1, the intake ducts 8 are split as they are provided with a swirl shutter system.

Similarly, the exhaust manifold 4 is connected to the cylinders 2 by means of respective exhaust pipes 9; an exhaust system 10 is connected to the exhaust manifold 4, which emits the combustion gases into the atmosphere and comprises an emission duct 11 provided with an exhaust gas treatment device 12; the exhaust gas treatment device 12 comprises a metal catalyst monolith 13, arranged upstream of the flow of exhaust gases, and a ceramic catalyst monolith 14, arranged downstream of the flow of exhaust gases. The exhaust system 10 also comprises at least one muffler 15, which shall be connected downstream of the exhaust gas treatment system 12.

The engine 1 comprises a turbocharger 16, which has the function of compressing the air along the intake duct 5 in order to increase the volumetric efficiency.

In particular, the turbocharger 16 comprises a turbine 17 arranged along the emission duct 11 upstream of the exhaust gas treatment device 12 and a compressor 18 arranged along the intake duct 3 upstream of the throttle valve 7. Along the intake duct 5 and between the compressor 18 and the intake manifold 3, there is a heat exchanger 19 (commonly called "intercooler"), which has the function of cooling the intake air to further increase the volumetric efficiency.

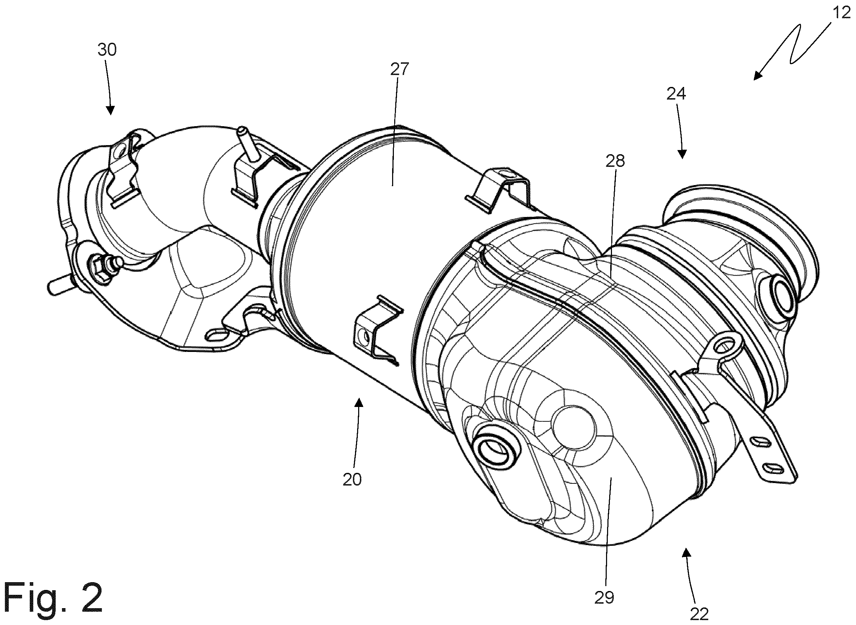

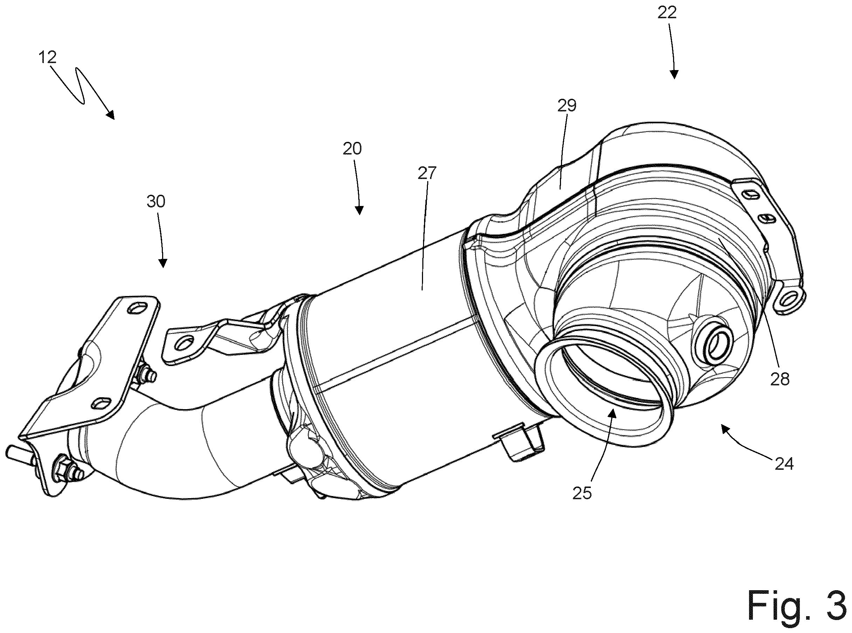

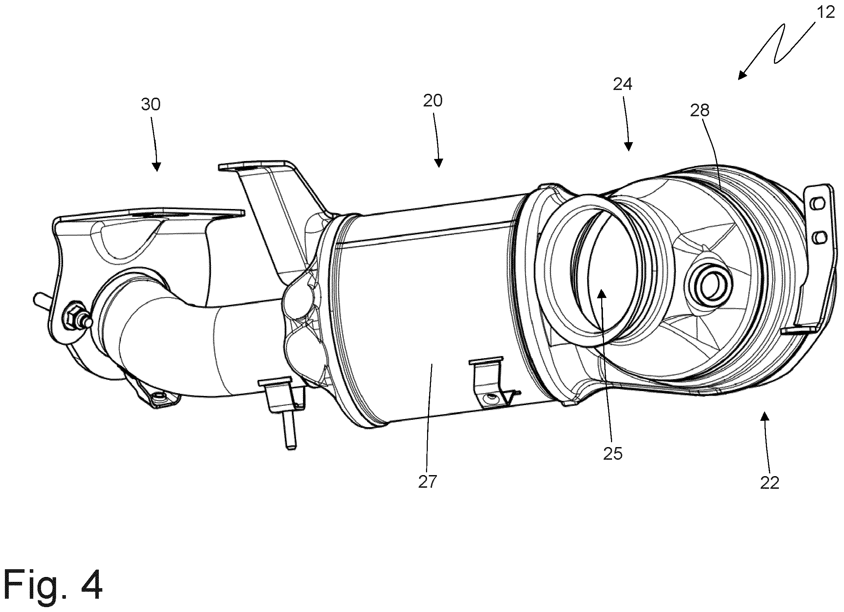

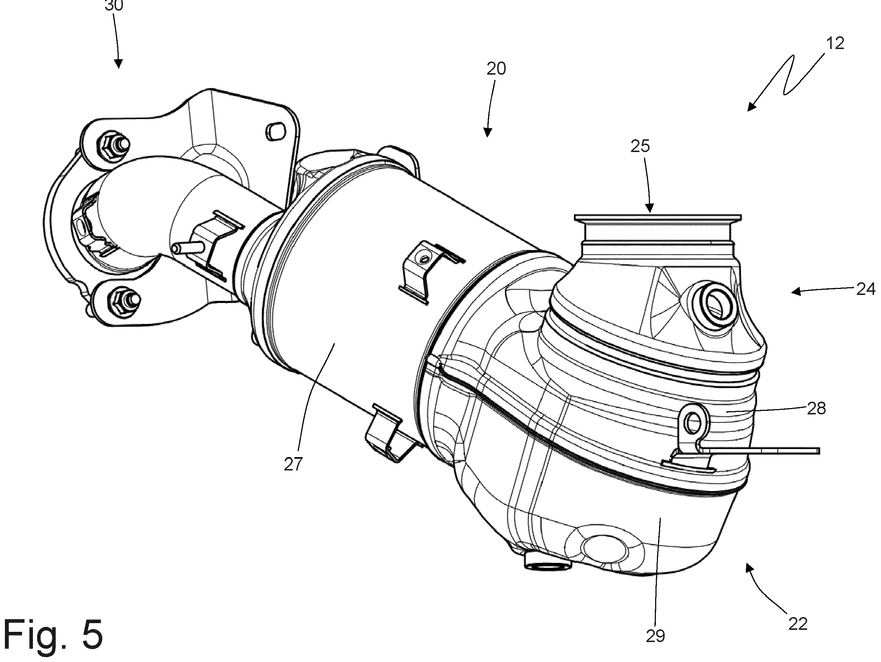

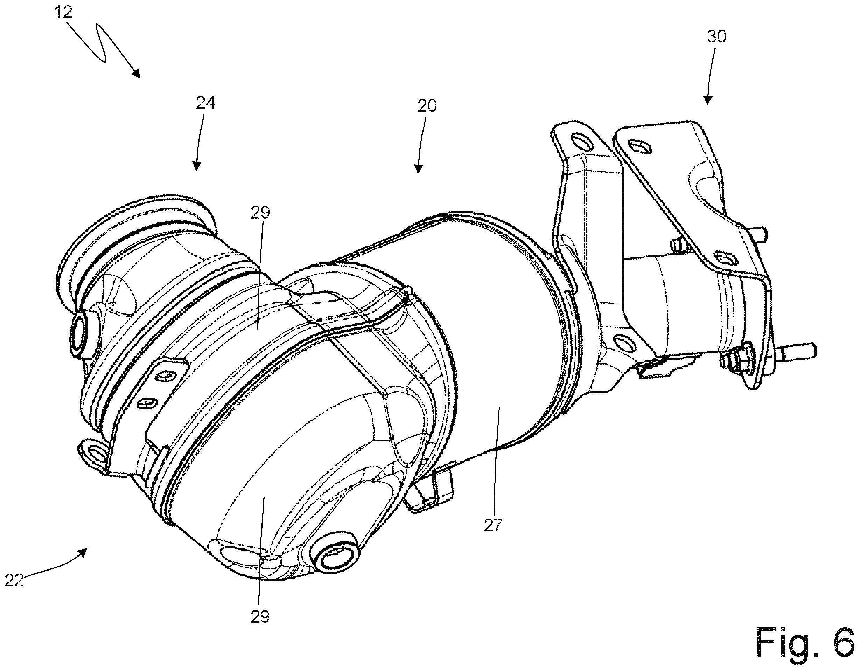

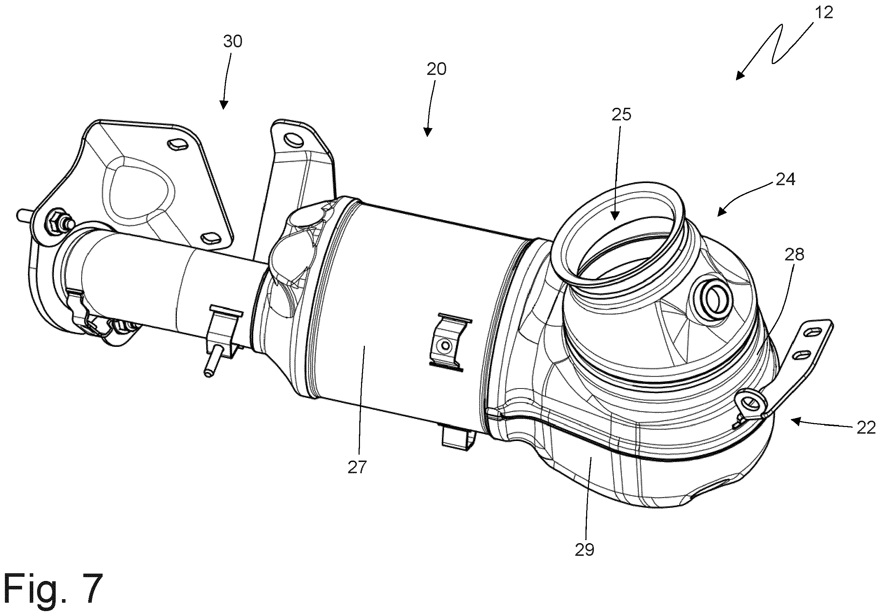

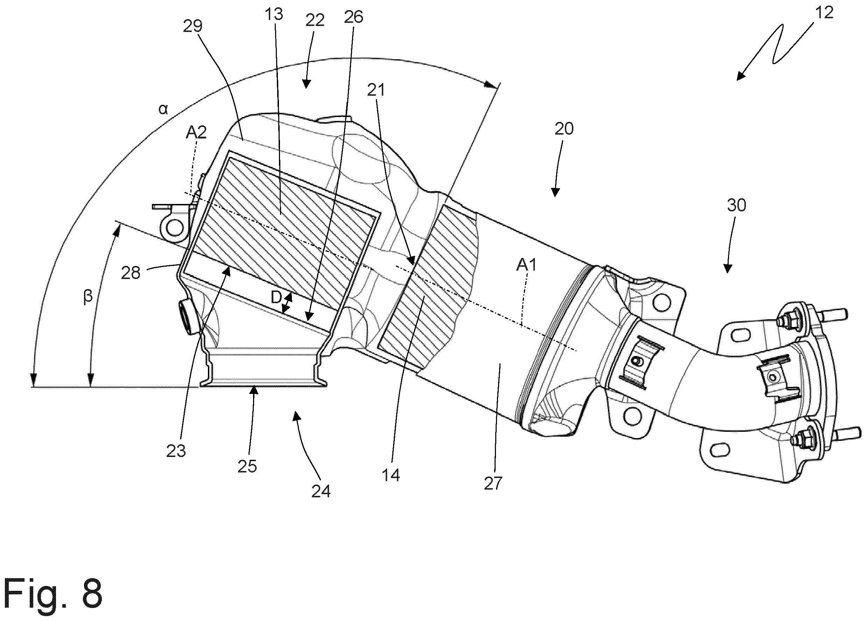

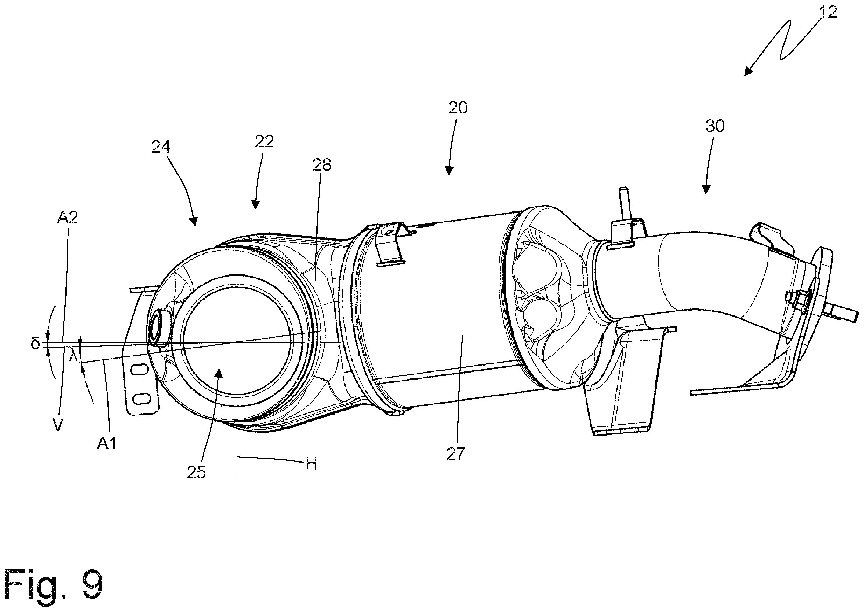

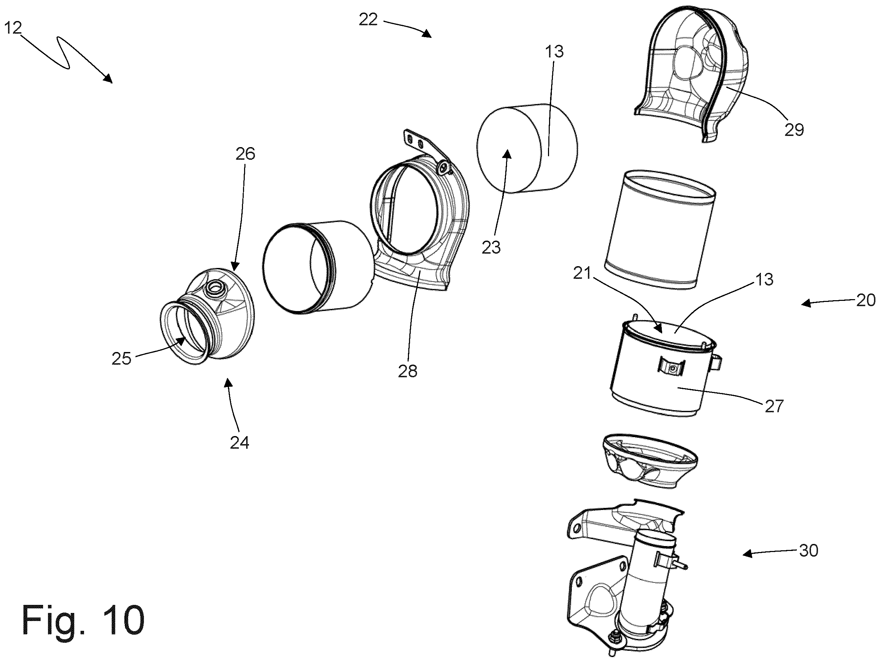

As illustrated in Figures 2-10, the exhaust gas treatment device 12 comprises a tubular body 20 with a cylindrical shape that extends about a longitudinal symmetry axis A1 (illustrated in Figures 8 and 9) and has an inlet opening with a circular shape perpendicular to the longitudinal axis A1 and an outlet opening with a circular shape parallel and opposite the inlet opening and perpendicular to the longitudinal axis A1.

As illustrated in Figure 8, the exhaust gas treatment device 12 comprises the catalyst monolith 14 that is arranged inside the tubular body 20 and has an inlet surface 21 through which the exhaust gases enter the catalyst monolith 14. The catalyst monolith 14 has a cylindrical shape and is coaxial to the tubular body 20, i.e. the longitudinal axis A1 of the tubular body 20 coincides with the longitudinal symmetry axis of the catalyst monolith 14. According to a preferred embodiment, the catalyst monolith 14 is ceramic and is both reducing and oxidizing (i.e. it is a TWC - Three Way Catalyst).

As shown in Figures 2-10, the exhaust gas treatment device 12 comprises a tubular body 22 that is directly fixed (welded) to the tubular body 20 and has an inlet opening with a circular shape and an outlet opening with a circular shape that is parallel to and faces the inlet opening of the tubular body 20.

As illustrated in Figure 8, the exhaust gas treatment device 12 comprises the catalyst monolith 13 that is arranged inside the tubular body 22 and has an inlet surface 23 through which the exhaust gases enter the catalyst monolith 13. The catalyst monolith 13 has a cylindrical shape and a longitudinal symmetry axis A2 that is not parallel and aligned with the longitudinal axis of the catalyst monolith 14. According to a preferred embodiment, the catalyst monolith 13 is metal and is both reducing and oxidizing (i.e. it is a TWC - Three Way Catalyst).

As shown in Figures 2-10, the exhaust gas treatment device 12 comprises a tubular body 24 that is hollow on the inside, is directly fixed (welded) to the tubular body 22, and has an inlet opening 25 with a circular shape that can be connected to an outlet of the turbine 17 of the turbocharger 16, and an outlet opening 26 with a circular shape that is parallel to and faces the inlet opening of the tubular body 22.

As shown in Figure 8, the inlet opening of the tubular body 22 is perpendicular to the outlet opening of the tubular body 22. In addition, the inlet opening 25 of the tubular body 24 forms an obtuse angle α, with the inlet surface 21 of the catalyst monolith 14, ranging from 105° to 135°, and preferably equal to 115°.

The inlet opening 25 of the tubular body 24 forms an acute angle β, with the inlet surface 23 of the catalyst monolith 13, ranging from 17° to 27°, and preferably equal to 22°. Finally, the catalyst monolith 13 is arranged at a distance not less than 12 mm from the inlet opening of the tubular body 22.

As shown in Figure 9, the longitudinal axis A1 of the catalyst monolith 14 (i.e. of the tubular body 20) forms an angle γ, with a vertical direction V (perpendicular to a horizontal direction H), ranging from 6° to 10°, and preferably equal to 8°. In addition, the longitudinal axis A2 of the catalyst monolith 13 forms an angle δ, with the vertical direction V (perpendicular to the horizontal direction H), ranging from 2° to 6°, and preferably equal to 4°, which is opposite the angle γ.

According to a preferred embodiment illustrated in the attached figures, the tubular body 20 has a circular cross-section; in addition, a side wall 27 of the tubular body consists of a single metal sheet bent onto itself and welded to take on a cylindrical shape.

According to a preferred embodiment illustrated in the attached figures, the tubular body 22 is obtained by joining two cup-shaped shells 28 and 29 welded to one another: one shell 28 comprises the entire inlet opening and half of the outlet opening, while the other shell 29 comprises the remaining half of the outlet opening (and no part of the inlet opening).

According to a preferred embodiment, illustrated in the attached figures, the outlet opening of the tubular body 22 has a larger diameter than the inlet opening of the tubular body 22. In particular, near the outlet opening the tubular body 22 has a passage area that progressively increases until it reaches a maximum diameter at the outlet opening.

As shown in Figure 8, there is an empty volume located inside the tubular body 22 between the catalyst monolith 13 and the outlet opening. In addition, there is an additional empty volume located inside the tubular body 22, next to the catalyst monolith 13, and between the catalyst monolith 13 and a wall of the shell 29 of the tubular body 22 opposite the inlet opening.

As shown in Figure 8, the inlet opening 25 of the tubular body 24 is not parallel to the outlet opening 26 of the tubular body 24; preferably, the outlet opening 26 of the tubular body 24 is parallel to the inlet surface 23 of the catalyst monolith 13 and, therefore, the inlet opening 25 of the tubular body 24 forms the acute angle β, with the outlet opening 26 of the tubular body 24, ranging from 17° to 27°, and preferably equal to 22°.

According to a preferred embodiment illustrated in the attached figures, the tubular body 24 has the shape of a truncated cone that increases in diameter from the inlet opening 25 to the outlet opening 26; consequently, the outlet opening 26 of the tubular body 24 has a larger diameter than the inlet opening 25 of the tubular body 24.

According to a preferred embodiment illustrated in the attached figures, the exhaust gas treatment device 12 comprises a connecting pipe 30 that receives the exhaust gases from the tubular body 20 and conveys the exhaust gases to the muffler 15.

The embodiments described herein may be combined with each other

The exhaust gas treatment device 12 described above has numerous advantages.

First, the exhaust gas treatment device 12 described above makes it possible to minimise the pressure loss i.e. the drop in pressure to which exhaust gases are subjected when they pass through the exhaust gas treatment device 12.

In addition, the exhaust gas treatment device 12 described above has a high pollutant reduction capacity in relation to the actual volume of the two catalyst monoliths 13 and 14.

Finally, the exhaust gas treatment device 12 described above is simple and cost-effective to implement because it requires neither the use of expensive materials nor the use of complex mechanical processing.

### LIST OF REFERENCE NUMBERS OF THE FIGURES

- 1: engine
- 2: cylinders
- 3: intake manifold
- 4: exhaust manifold
- 5: intake duct
- 6: air filter
- 7: throttle valve
- 8: intake ducts
- 9: exhaust pipes
- 10: exhaust system
- 11: emission duct
- 12: treatment device
- 13: catalyst monolith
- 14: catalyst monolith
- 15: muffler
- 16: turbocharger
- 17: turbine
- 18: compressor
- 19: heat exchanger
- 20: tubular body
- 21: inlet surface
- 22: tubular body
- 23: inlet surface
- 24: tubular body
- 25: inlet opening
- 26: outlet opening
- 27: side wall
- 28: shell
- 29: shell
- 30: connection pipe

## Claims

1. An exhaust gas treatment device (12) for an internal combustion engine (1); the exhaust gas treatment device (12) comprises:
a first tubular body (20) with a cylindrical shape, which develops around a longitudinal symmetry axis (A1) and has a first inlet opening with a circular shape, which is perpendicular to the longitudinal axis (A1), and a first outlet opening with a circular shape, which is parallel to and opposite the first inlet opening and perpendicular to the longitudinal axis (A1);
a first catalyst monolith (14), which is arranged inside the first tubular body (20) and has a first inlet surface (21), through which the exhaust gases get into the first catalyst monolith (14);
a second tubular body (22), which is directly fixed to the first tubular body (20) and has a second inlet opening with a circular shape and a second outlet opening with a circular shape, which is parallel to and faces the first inlet opening of the first tubular body (20);
a second catalyst monolith (13), which is arranged inside the second tubular body (22) and has a second inlet surface (23), through which the exhaust gases get into the second catalyst monolith (13);
a third tubular body (24), which is hollow on the inside, is directly fixed to the second tubular body (22) and has a third inlet opening (25) with a circular shape, which can be connected to an outlet of a turbine (17) of a turbocharger (16) of the internal combustion engine (1), and a third outlet opening (26) with a circular shape, which is parallel to and faces the second inlet opening of the second tubular body (22); and
the second inlet opening of the second tubular body (22) is perpendicular to the second outlet opening of the second tubular body (22);
the exhaust gas treatment device (12) is **characterized in that**:
the third inlet opening (25) of the third tubular body (24) forms, with the first inlet surface (21) of the first catalyst monolith (14), a first obtuse angle (α) ranging from 105° to 135° and preferably equal to 115°; and
the third inlet opening (25) of the third tubular body (24) forms, with the second inlet surface (23) of the second catalyst monolith (13), a second acute angle (β) ranging from 17° to 27° and preferably equal to 22°.

2. The exhaust gas treatment device (12) according to claim 1, wherein the first tubular body (20) has a circular cross section.

3. The exhaust gas treatment device (12) according to claim 1 or 2, wherein a side wall (27) of the first tubular body (20) consists of one single metal sheet bent onto itself in order to assume a cylindrical shape.

4. The exhaust gas treatment device (12) according to claim 1, 2 or 3, wherein:
the second tubular body (22) is obtained by joining two cup-shaped shells (28, 29) welded to one another;
a first shell (28) comprises the entire second inlet opening and half of the second outlet opening; and
a second shell (29) comprises a remaining half of the second outlet opening.

5. The exhaust gas treatment device (12) according to one of the claims from 1 to 4, wherein the second outlet opening of the second tubular body (22) has a greater diameter than the second inlet opening of the second tubular body (22).

6. The exhaust gas treatment device (12) according to one of the claims from 1 to 5, wherein the third outlet opening (26) of the third tubular body (24) has a greater diameter than the third inlet opening (25) of the third tubular body (24).

7. The exhaust gas treatment device (12) according to claim 6, wherein the third tubular body (24) has the shape of a truncated cone, which increases the diameter from the third inlet opening (25) to the third outlet opening (26).

8. The exhaust gas treatment device (12) according to one of the claims from 1 to 7, wherein the third inlet opening (25) of the third tubular body (24) is not parallel to the third outlet opening (26) of the third tubular body (24) .

9. The exhaust gas treatment device (12) according to one of the claims from 1 to 8, wherein the second catalyst monolith (13) is arranged at a distance no less than 12 mm from the second inlet opening of the second tubular body (22) .

10. The exhaust gas treatment device (12) according to one of the claims from 1 to 9, wherein, close to the second outlet opening, the second tubular body (22) has a passage area, which progressively increases until reaching a maximum value at the second outlet opening.

11. The exhaust gas treatment device (12) according to one of the claims from 1 to 10, wherein there is a first empty volume, which is located inside the second tubular body (22) between the second catalyst monolith (13) and the second outlet opening.

12. The exhaust gas treatment device (12) according to one of the claims from 1 to 11, wherein there is a second empty volume, which is located inside the second tubular body (22), next to the second catalyst monolith (13), between the second catalyst monolith (13) and a wall of the second tubular body (22), which is opposite the second outlet opening.

## Patentansprüche

1. Abgasbehandlungsvorrichtung (12) für eine Verbrennungskraftmaschine (1); wobei die Abgasbehandlungsvorrichtung (12) umfasst:
einen ersten rohrförmigen Körper (20) mit einer zylindrischen Form, der sich um eine Längssymmetrieachse (A1) herum ausbildet und eine erste Einlassöffnung mit einer Kreisform, die senkrecht zu der Längsachse (A1) ist, und eine erste Auslassöffnung mit einer Kreisform, die parallel und gegenüberliegend zu der ersten Einlassöffnung und senkrecht zu der Längsachse (A1) ist, aufweist;
einen ersten Katalysatormonolithen (14), der im Inneren des ersten rohrförmigen Körpers (20) angeordnet ist und eine erste Einlassfläche (21) aufweist, durch die die Abgase in den ersten Katalysatormonolithen (14) gelangen;
einen zweiten röhrenförmigen Körper (22), der direkt an dem ersten röhrenförmigen Körper (20) befestigt ist und eine zweite Einlassöffnung mit einer Kreisform und eine zweite Auslassöffnung mit einer Kreisform, die parallel zu der ersten Einlassöffnung des ersten röhrenförmigen Körpers (20) ist und dieser zugewandt ist, aufweist;
einen zweiten Katalysatormonolithen (13), der im Inneren des zweiten rohrförmigen Körpers (22) angeordnet ist und eine zweite Einlassfläche (23) aufweist, durch die die Abgase in den zweiten Katalysatormonolithen (13) gelangen;
einen dritten rohrförmiger Körper (24), der innen hohl ist, direkt an dem zweiten rohrförmigen Körper (22) befestigt ist und eine dritte Einlassöffnung (25) mit einer Kreisform, die mit einem Auslass einer Turbine (17) eines Turboladers (16) der Verbrennungskraftmaschine (1) verbunden werden kann, und eine dritte Auslassöffnung (26) mit einer Kreisform, die parallel zu der zweiten Einlassöffnung des zweiten rohrförmigen Körpers (22) ist und dieser zugewandt ist, aufweist; wobei
die zweite Einlassöffnung des zweiten rohrförmigen Körpers (22) senkrecht zu der zweiten Auslassöffnung des zweiten rohrförmigen Körpers (22) ist;
wobei die Abgasbehandlungsvorrichtung (12) **dadurch gekennzeichnet ist, dass**:
die dritte Einlassöffnung (25) des dritten rohrförmigen Körpers (24) mit der ersten Einlassfläche (21) des ersten Katalysatormonolithen (14) einen ersten stumpfen Winkel (α) von 105° bis 135° und vorzugsweise gleich 115° bildet; und
die dritte Einlassöffnung (25) des dritten rohrförmigen Körpers (24) mit der zweiten Einlassfläche (23) des zweiten Katalysatormonolithen (13) einen zweiten spitzen Winkel (β) im Bereich von 17° bis 27° und vorzugsweise gleich 22° bildet.

2. Abgasbehandlungsvorrichtung (12) nach Anspruch 1, wobei der erste rohrförmige Körper (20) einen kreisförmigen Querschnitt aufweist.

3. Abgasbehandlungsvorrichtung (12) nach Anspruch 1 oder 2, wobei eine Seitenwand (27) des ersten rohrförmigen Körpers (20) aus einem einzigen Metallblech besteht, das auf sich selbst zurückgebogen ist, um eine zylindrische Form anzunehmen.

4. Abgasbehandlungsvorrichtung (12) nach Anspruch 1, 2 oder 3, wobei:
der zweite rohrförmige Körper (22) durch Zusammenfügen von zwei miteinander verschweißten becherförmigen Schalen (28, 29) erhalten wird;
eine erste Schale (28) die gesamte zweite Einlassöffnung und die Hälfte der zweiten Auslassöffnung umfasst; und
eine zweite Schale (29) die verbleibende Hälfte der zweiten Auslassöffnung umfasst.

5. Abgasbehandlungsvorrichtung (12) nach einem der Ansprüche 1 bis 4, wobei die zweite Auslassöffnung des zweiten rohrförmigen Körpers (22) einen größeren Durchmesser aufweist als die zweite Einlassöffnung des zweiten rohrförmigen Körpers (22).

6. Abgasbehandlungsvorrichtung (12) nach einem der Ansprüche 1 bis 5, wobei die dritte Auslassöffnung (26) des dritten rohrförmigen Körpers (24) einen größeren Durchmesser aufweist als die dritte Einlassöffnung (25) des dritten rohrförmigen Körpers (24).

7. Abgasbehandlungsvorrichtung (12) nach Anspruch 6, wobei der dritte rohrförmige Körper (24) die Form eines Kegelstumpfes aufweist, der im Durchmesser von der dritten Einlassöffnung (25) zu der dritten Auslassöffnung (26) zunimmt.

8. Abgasbehandlungsvorrichtung (12) nach einem der Ansprüche 1 bis 7, wobei die dritte Einlassöffnung (25) des dritten rohrförmigen Körpers (24) nicht parallel zu der dritten Auslassöffnung (26) des dritten rohrförmigen Körpers (24) ist.

9. Abgasbehandlungsvorrichtung (12) nach einem der Ansprüche 1 bis 8, wobei der zweite Katalysatormonolith (13) in einem Abstand von nicht weniger als 12 mm von der zweiten Einlassöffnung des zweiten rohrförmigen Körpers (22) angeordnet ist.

10. Abgasbehandlungsvorrichtung (12) nach einem der Ansprüche 1 bis 9, wobei der zweite rohrförmige Körper (22) nahe der zweiten Auslassöffnung eine Durchtrittsfläche aufweist, die progressiv zunimmt, bis sie an der zweiten Auslassöffnung einen Maximalwert erreicht.

11. Abgasbehandlungsvorrichtung (12) nach einem der Ansprüche 1 bis 10, wobei ein erstes Leervolumen vorhanden ist, das im Inneren des zweiten rohrförmigen Körpers (22) zwischen dem zweiten Katalysatormonolithen (13) und der zweiten Auslassöffnung angeordnet ist.

12. Abgasbehandlungsvorrichtung (12) nach einem der Ansprüche 1 bis 11, wobei ein zweites Leervolumen vorhanden ist, das im Inneren des zweiten rohrförmigen Körpers (22) neben dem zweiten Katalysatormonolithen (13) zwischen dem zweiten Katalysatormonolithen (13) und einer der zweiten Auslassöffnung gegenüberliegenden Wand des zweiten rohrförmigen Körpers (22) angeordnet ist.

## Revendications

1. Dispositif de traitement de gaz d'échappement (12) pour un moteur à combustion interne (1); le dispositif de traitement de gaz d'échappement (12) comprend :
un premier corps tubulaire (20) d'une forme cylindrique, qui se développe autour d'un axe de symétrie longitudinal (A1) et comporte une première ouverture d'entrée d'une forme circulaire, qui est perpendiculaire à l'axe longitudinal (A1), et une première ouverture de sortie d'une forme circulaire, qui est parallèle et opposée à la première ouverture d'entrée et perpendiculaire à l'axe longitudinal (A1) ;
un premier monolithe catalyseur (14), qui est agencé à l'intérieur du premier corps tubulaire (20) et comporte une première surface d'entrée (21), par laquelle les gaz d'échappement entrent dans le premier monolithe catalyseur (14) ;
un deuxième corps tubulaire (22), qui est directement fixé au premier corps tubulaire (20) et comporte une deuxième ouverture d'entrée d'une forme circulaire et une deuxième ouverture de sortie d'une forme circulaire, qui est parallèle et fait face à la première ouverture d'entrée du premier corps tubulaire (20) ;
un deuxième monolithe catalyseur (13), qui est agencé à l'intérieur du deuxième corps tubulaire (22) et comporte une deuxième surface d'entrée (23), par laquelle les gaz d'échappement entrent dans le deuxième monolithe catalyseur (13) ;
un troisième corps tubulaire (24), qui est creux sur l'intérieur, est directement fixé au deuxième corps tubulaire (22) et comporte une troisième ouverture d'entrée (25) d'une forme circulaire, qui peut être reliée à une sortie d'une turbine (17) d'un turbocompresseur (16) du moteur à combustion interne (1), et une troisième ouverture de sortie (26) d'une forme circulaire, qui est parallèle et fait face à la deuxième ouverture d'entrée du deuxième corps tubulaire (22) ; et
la deuxième ouverture d'entrée du deuxième corps tubulaire (22) est perpendiculaire à la deuxième ouverture de sortie du deuxième corps tubulaire (22) ;
le dispositif de traitement de gaz d'échappement (12) est **caractérisé en ce que** :
la troisième ouverture d'entrée (25) du troisième corps tubulaire (24) forme, avec la première surface d'entrée (21) du premier monolithe catalyseur (14), un premier angle obtus (α) compris dans la plage de 105° à 135° et de préférence égal à 115° ; et
la troisième ouverture d'entrée (25) du troisième corps tubulaire (24) forme, avec la deuxième surface d'entrée (23) du deuxième monolithe catalyseur (13), un deuxième angle obtus (β) compris dans la plage de 17° à 27° et de préférence égal à 22°.

2. Dispositif de traitement de gaz d'échappement (12) selon la revendication 1, dans lequel le premier corps tubulaire (20) présente une coupe transversale circulaire.

3. Dispositif de traitement de gaz d'échappement (12) selon la revendication 1 ou 2, dans lequel une paroi latérale (27) du premier corps tubulaire (20) est constituée d'une seule feuille métallique pliée sur elle-même afin d'adopter une forme cylindrique.

4. Dispositif de traitement de gaz d'échappement (12) selon la revendication 1, 2 ou 3, dans lequel :
le deuxième corps tubulaire (22) est obtenu en joignant deux coques cupuliformes (28, 29) soudées l'une à l'autre ;
une première coque (28) comprend la totalité de la deuxième ouverture d'entrée et une moitié de la deuxième ouverture de sortie ; et
une deuxième coque (29) comprend une moitié restante de la deuxième ouverture de sortie.

5. Dispositif de traitement de gaz d'échappement (12) selon l'une des revendications 1 à 4, dans lequel la deuxième ouverture de sortie du deuxième corps tubulaire (22) présente un diamètre plus grand que celui de la deuxième ouverture d'entrée du deuxième corps tubulaire (22).

6. Dispositif de traitement de gaz d'échappement (12) selon l'une des revendications 1 à 5, dans lequel la troisième ouverture de sortie (26) du troisième corps tubulaire (24) présente un diamètre plus grand que celui de la troisième ouverture d'entrée (25) du troisième corps tubulaire (24).

7. Dispositif de traitement de gaz d'échappement (12) selon la revendication 6, dans lequel le troisième corps tubulaire (24) a la forme d'un cône tronqué, dont le diamètre augmente depuis la troisième ouverture d'entrée (25) vers la troisième ouverture de sortie (26) .

8. Dispositif de traitement de gaz d'échappement (12) selon l'une des revendications 1 à 7, dans lequel la troisième ouverture d'entrée (25) du troisième corps tubulaire (24) n'est pas parallèle à la troisième ouverture de sortie (26) du troisième corps tubulaire (24).

9. Dispositif de traitement de gaz d'échappement (12) selon l'une des revendications 1 à 8, dans lequel le deuxième monolithe catalyseur (13) est agencé à une distance de pas moins de 12 mm de la deuxième ouverture d'entrée du deuxième corps tubulaire (22).

10. Dispositif de traitement de gaz d'échappement (12) selon l'une des revendications 1 à 9, dans lequel, près de la deuxième ouverture de sortie, le deuxième corps tubulaire (22) comporte une zone de passage, qui augmente progressivement jusqu'à atteindre une valeur maximale au niveau de la deuxième ouverture de sortie.

11. Dispositif de traitement de gaz d'échappement (12) selon l'une des revendications 1 à 10, dans lequel il y a un premier volume vide, qui est situé à l'intérieur du deuxième corps tubulaire (22) entre le deuxième monolithe catalyseur (13) et la deuxième ouverture de sortie.

12. Dispositif de traitement de gaz d'échappement (12) selon l'une des revendications 1 à 11, dans lequel il y a un deuxième volume vide, qui est situé à l'intérieur du deuxième corps tubulaire (22), à côté du deuxième monolithe catalyseur (13), entre le deuxième monolithe catalyseur (13) et une paroi du deuxième corps tubulaire (22), qui est opposée à la deuxième ouverture de sortie.
